# EUROPÄISCHE PATENTSCHRIFT

(11) **EP 2 147 619 B1**
(45) Veröffentlichungstag und Bekanntmachung des Hinweises auf die Patenterteilung: **23.06.2010**
(21) Anmeldenummer: 09164149.8
(22) Anmeldetag: 30.06.2009
(51) Int. Cl.: A47J 31/06

(54) **Vorrichtung zur Zubereitung eines Getränks**
Device for preparing a drink
Dispositif de préparation d'une boisson

(30) Priorität: 23.07.2008 DE 202008009855 U
(43) Veröffentlichungstag der Anmeldung: 27.01.2010
(73) Patentinhaber: MELITTA HAUSHALTSPRODUKTE GmbH & Co. Kommanditgesellschaft, D-32427 Minden (DE)
(72) Erfinder: Weinreich, Steffen, 32427, Minden (DE)
(74) Vertreter: Dantz, Jan Henning

(56) Entgegenhaltungen:
- EP-A- 0 726 053
- EP-A- 1 319 357
- US-A- 5 150 645

## Beschreibung

Die vorliegende Erfindung betrifft eine Vorrichtung zur Zubereitung eines Getränkes, insbesondere Kaffee, mit einem Tank mit einer Flüssigkeit, die über eine Pumpe zu einer Brühkammer förderbar ist, wobei die Brühkammer über ein Ventil verschließbar ist und der Brühdruck abhängig von dem zuzubereitenden Getränk verstellbar ist (siehe EP-A-1 319 357).

Es gibt Kaffeeautomaten, bei denen über eine Pumpe heißes Wasser in eine Brühkammer gefördert wird, wobei der Brühdruck dem am Ventil an der Brühkammer erzeugten Gegendruck entspricht. Alle Getränke werden mit dem gleichen Brühdruck erzeugt. Manche Heißgetränke müssen jedoch mit unterschiedlichem Brühdruck hergestellt werden, beispielsweise wird bei Filterkaffee kein Brühdruck benötigt, während Kaffeecreme bei 1 bis 3 bar erzeugt wird und Espresso bei 8 bis 9 bar hergestellt werden muss.

Es ist daher Aufgabe der vorliegenden Erfindung eine Vorrichtung zur Zubereitung eines Getränkes zu schaffen, bei dem mit einfachen Mitteln auch unterschiedliche Brühdrücke bereitgestellt werden können.

Diese Aufgabe wird mit einer Vorrichtung mit den Merkmalen des Anspruches 1 gelöst.

Erfindungsgemäß ist die Brühkammer über ein Ventil verschließbar, das mit einer Blattfeder gekoppelt ist, deren Federkraft zum Verschließen des Ventils verstellbar ist. Dadurch kann mit einfachen Mitteln die Schließkraft des Ventils geändert werden, um bei einem Brühvorgang den Brühdruck innerhalb der Brühkammer zu verändern. Dies ermöglicht eine qualitativ hochwertige Herstellung von Filterkaffee, Kaffee Creme oder Espresso, je nachdem welches Getränk mit der Vorrichtung hergestellt werden soll.

Gemäß einer bevorzugten Ausgestaltung der Erfindung ist ein Schieber vorgesehen, mittels dem die Federkraft einstellbar ist. Ein solcher Schieber lässt sich leicht betätigen und es sind nur wenige Bauteile erforderlich, um eine Verstellung des Brühdruckes vorzunehmen.

Vorzugsweise ist das Ventil zwischen der Brühkammer und einer Ausgabe für das Getränk angeordnet. Dadurch können die Leitungen kurz gehalten werden.

Um eine optimale Cremaqualität zu gewährleisten und ein Austreten von Flüssigkeit aus der Brühkammer zu vermeiden, ist vorzugsweise ein Dichtelement zum Verschließen einer Durchflussleitung an der Blattfeder festgelegt. Dieses Dichtelement kann auch Bestandteil des Ventils sein, um eine sichere Abdichtung zu gewährleisten.

Für eine einfache Verstellung kann der Schieber linear entlang der Blattfeder geführt sein. Der Schieber kann dabei manuell oder über einen Antrieb verstellt werden. Vorzugsweise ist eine Steuerung vorgesehen, mittels der die Position des Schiebers erfassbar ist, so dass der Brühdruck beispielsweise auch an einer Anzeige für den Benutzer angezeigt werden kann. Der Brühdruck kann dabei stufenlos in einem Bereich zwischen 0 bis 10 bar verstellt werden.

In einer weiteren Ausgestaltung der Erfindung ist der Schieber als Klammer ausgebildet, mittels der die Länge des verschwenkbaren Teils der Blattfeder verstellbar ist.

Um mit der Vorrichtung auch eine drucklose Zubereitung von Getränken zu ermöglichen, kann das Ventil vorzugsweise in einer geöffneten Position fixiert werden.

Die Erfindung wird nachfolgend anhand eines Ausführungsbeispieles mit Bezug auf die beigefügten Zeichnungen näher erläutert. Es zeigen:

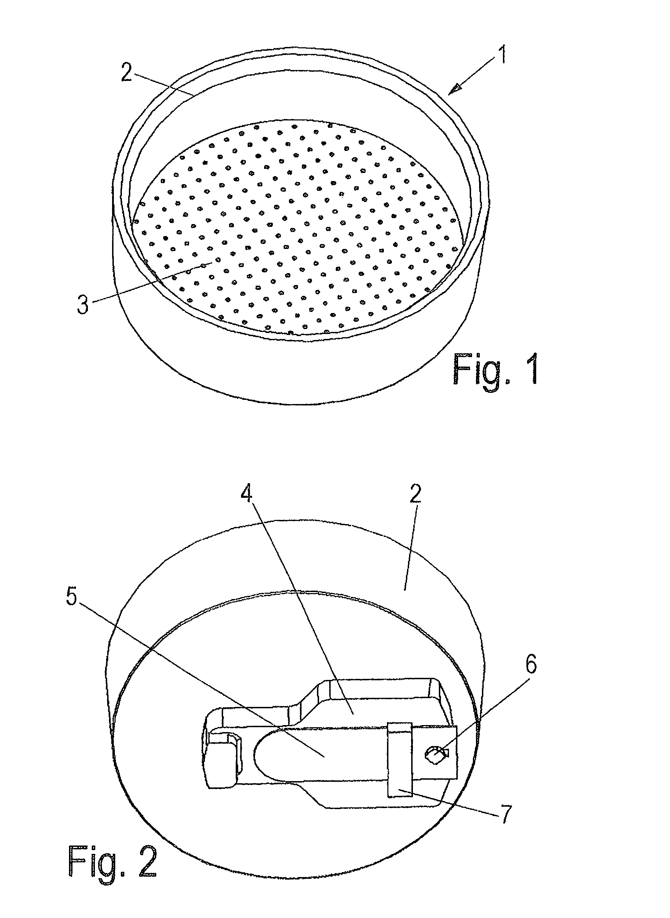

- Figur 1: eine perspektivische Ansicht eines unteren Teils einer Brühkammer;
- Figur 2: eine perspektivische Ansicht der Brühkammer der Figur 1;
- Figur 3: eine Schnittansicht durch die Brühkammer der Figur 1, und
- Figur 4: eine Schnittansicht der Brühkammer der Figur 1 mit geöffnetem Ventil.

Eine Vorrichtung zur Zubereitung eines Getränkes, insbesondere Kaffee, umfasst eine Fördereinrichtung für Flüssigkeit, die zu einer Brühkammer 1 geleitet werden kann. Die dargestellte Brühkammer 1 umfasst ein topfförmiges Gehäuse 2, wobei nur der untere Teil der Brühkammer 1 dargestellt ist. Die Brühkammer 1 ist an ihrer Oberseite verschlossen ausgebildet, um unter Druck ein Getränk brühen zu können.

Innerhalb der Brühkammer 2 ist ein Sieb und/oder Filterpapier vorgesehen, auf dem Kaffeemehl aufgebracht werden kann. Eine andere Möglichkeit ist die Verwendung von Kapseln oder Pads in der Brühkammer 2.

An einem Boden 4 der Brühkammer ist eine Blattfeder 5 montiert, die an einer Seite an einem Zapfen 6 festgelegt und drehbar gelagert ist. An der Blattfeder 5 ist ein Schieber 7 linear geführt. Mittels des Schiebers 7 kann der verschwenkbare Teil der Blattfeder 5 in der Länge verstellt werden.

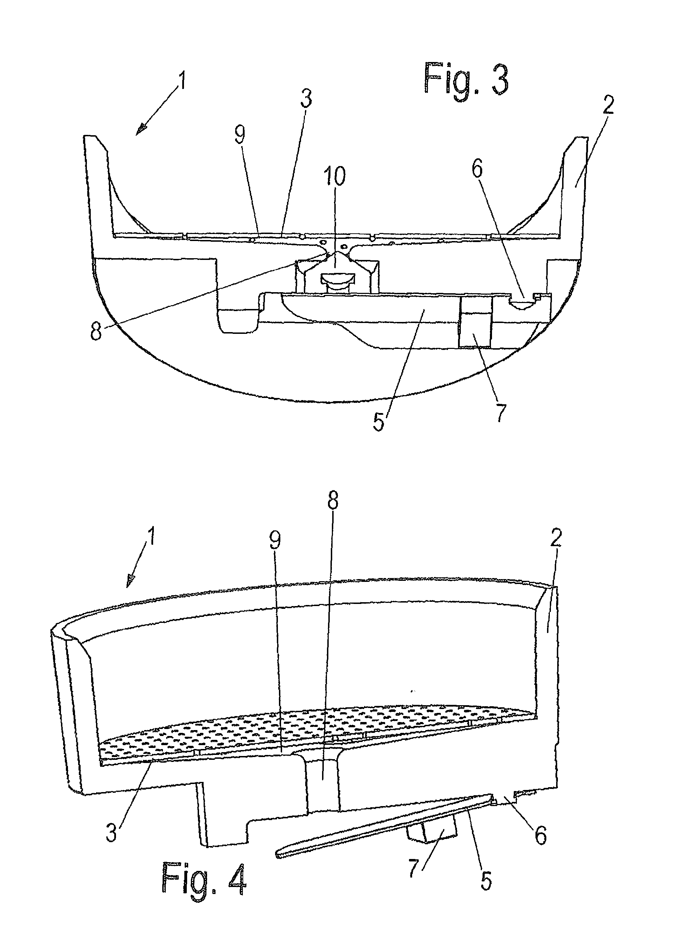

In Figur 3 ist die Brühkammer 1 im Schnitt dargestellt, wobei am Boden der Brühkammer 1 ein plattenförmiges Sieb 3 vorgesehen ist. Der Boden des Gehäuses 2 der Brühkammer fällt zu einem mittleren Bereich hingegen ab, so dass ein Spalt 9 zwischen dem Sieb 3 und dem Boden des Gehäuses 2 vorgesehen ist. An der tiefsten Stelle des Bodens des Gehäuses 2 befindet sich eine Auslassöffnung 8, an der ein Ventilkopf 10 angeordnet ist. Der Ventilkopf 10 verschließt die Auslassöffnung 8 an der Brühkammer 1, wobei der Ventilkopf 10 an einem Endabschnitt der Blattfeder 5 festgelegt ist.

Die Blattfeder 5 ist plattenförmig aus einem elastischen Material, insbesondere Metall, ausgebildet und an einer Seite drehbar festgelegt. Der verschwenkbare Teil der Blattfeder 5 mit dem Ventilkopf 10 kann in der Länge verstellt werden, wofür ein Schieber 7 an dem Gehäuse 2 geführt ist. Der Schieber 7 ist klammerartig ausgebildet und umgreift die Blattfeder 5 an der Unterseite. Ja nach Stellung des Schiebers 7 muss ein unterschiedlicher Druck in der Brühkammer 1 aufgewendet werden, um den Ventilkopf 10 aus der Auslassöffnung 8 zu drücken und das Fluid auszugeben. Der Ventilkopf 10 kann dabei aus einem elastischem Material bestehen oder damit beschichtet sein, wobei der Ventilkopf 10 an einem Endabschnitt der Blattfeder 5 festgelegt ist.

In Figur 3 ist an der Blattfeder 5 ein Ventilkopf 10 angeordnet, der in eine Aussparung an dem Boden des Gehäuses 2 hineinragt. Es ist natürlich auch möglich, entsprechend Figur 4 die Blattfeder 5 eben auszugestalten und diese gegen die Auslassöffnung 8 zu drücken und dadurch eine Abdichtung zu erreichen. Die Blattfeder 5 kann im Bereich der Auslassöffnung 8 auch mit einer Beschichtung versehen sein.

In Figur 4 ist die Brühkammer 1 ohne den Ventilkopf 10 an der Blattfeder 5 dargestellt. Die Blattfeder 5 befindet sich in einer geöffneten Position, in der der Auslasskanal 8 an dem Gehäuse 2 freigegeben ist. Dadurch wird gewährleistet, dass ein Brühvorgang auch im drucklosen Zustand erfolgen kann, also ohne dass der Ventilkopf 10 oder die Blattfeder 5 den Auslasskanal 8 verschließen. Dies ist insbesondere für die Herstellung von Filterkaffee wichtig.

Die Verstellung des Schiebers 7 entlang der Blattfeder 5 kann manuell oder über einen Antrieb erfolgen. Ferner kann ein Sensor vorgesehen sein, um die Position des Schiebers 7 zu erfassen, um dann an die Steuerung ein Signal auszugeben, welcher Brühdruck an der Brühkammer 1 zur Ausgabe eines Getränkes erforderlich ist. Entsprechende Informationen können auch mittels einer Anzeige angezeigt werden.

## Patentansprüche

1. Vorrichtung zur Zubereitung eines Getränks, insbesondere Kaffee, mit einem Tank mit einer Flüssigkeit, die über eine Pumpe zu einer Brühkammer (1) förderbar ist, wobei die Brühkammer (1) über ein Ventil (10) verschließbar ist und der Brühdruck abhängig von dem zuzubereitenden Getränk verstellbar ist, **dadurch gekennzeichnet, dass** das Ventil (10) mit einer Blattfeder (5) gekoppelt ist, deren Federkraft zum Verschließen des Ventils (10) verstellbar ist.

2. Vorrichtung nach Anspruch 1, **dadurch gekennzeichnet, dass** ein Schieber (7) vorgesehen ist, mittels dem die Federkraft einstellbar ist.

3. Vorrichtung nach Anspruch 1 oder 2, **dadurch gekennzeichnet, dass** das Ventil (10) zwischen der Brühkammer (1) und einer Ausgabe für das Getränk angeordnet ist.

4. Vorrichtung nach einem der Ansprüche 1 bis 3, **dadurch gekennzeichnet, dass** ein Dichtelement zum Verschließen einer Durchflussleitung (8) an der Blattfeder (5) festgelegt ist.

5. Vorrichtung nach einem der Ansprüche 1 bis 4, **dadurch gekennzeichnet, dass** der Schieber (7) linear entlang der Blattfeder (5) geführt ist.

6. Vorrichtung nach einem der Ansprüche 1 bis 5, **dadurch gekennzeichnet, dass** der Schieber manuell verstellbar ist.

7. Vorrichtung nach einem der Ansprüche 1 bis 5, **dadurch gekennzeichnet, dass** der Schieber (7) mittels eines Antriebes verstellbar ist.

8. Vorrichtung nach einem der Ansprüche 1 bis 7, **dadurch gekennzeichnet, dass** eine Steuerung vorgesehen ist, mittels der die Position des Schiebers (7) erfassbar ist.

9. Vorrichtung nach einem der Ansprüche 1 bis 8, **dadurch gekennzeichnet, dass** der Brühdruck in einem Bereich zwischen 0 bis 10 bar verstellbar ist.

10. Vorrichtung nach einem der Ansprüche 1 bis 9, **dadurch gekennzeichnet, dass** eine stufenlose Verstellung des Brühdruckes möglich ist.

11. Vorrichtung nach einem der Ansprüche 1 bis 10, **dadurch gekennzeichnet, dass** einer vorbestimmten Position des Schiebers (7) ein entsprechender Brühdruck zugeordnet ist.

12. Vorrichtung nach einem der Ansprüche 1 bis 11, **dadurch gekennzeichnet, dass** der Schieber (7) als Klammer ausgebildet ist, mittels der die Länge des verschwenkbaren Teils der Blattfeder (5) verstellbar ist.

13. Vorrichtung nach einem der Ansprüche 1 bis 12, **dadurch gekennzeichnet, dass** das Ventil zur drucklosen Zubereitung eines Getränkes in einer geöffneten Position fixierbar ist.

## Claims

1. Device for preparing a beverage, particularly coffee, with a tank with a liquid which can be conveyed by way of a pump to a brewing chamber (1), wherein the brewing chamber (1) is closable by way of a valve (10) and the brewing pressure is adjustable in dependence on the beverage to be prepared, **characterised in that** the valve (10) is coupled with a leaf spring, the spring force of which is adjustable for closing the valve (10).

2. Device according to claim 1, **characterised in that** a slide (7) is provided, by means of which the spring force is settable.

3. Device according to claim 1 or 2, **characterised in that** the valve (10) is arranged between the brewing chamber (1) and a delivery point for the beverage.

4. Device according to any one of claims 1 to 3, **characterised in that** a sealing element for closing a throughflow duct (8) is fixed to the leaf spring (5).

5. Device according to any one of claims 1 to 4, **characterised in that** the slide (7) is linearly guided along the leaf spring (5).

6. Device according to any one of claims 1 to 5, **characterised in that** the slide is manually adjustable.

7. Device according to any one of claims 1 to 5, **characterised in that** the slide (7) is adjustable by means of a drive.

8. Device according to any one of claims 1 to 7, **characterised in that** a control by means of which the position of the slide (7) is detectable is provided.

9. Device according to any one of claims 1 to 8, **characterised in that** the brewing pressure is adjustable in a range between 0 and 10 bars.

10. Device according to any one of claims 1 to 9, **characterised in that** a stepless adjustment of the brewing pressure is possible.

11. Device according to any one of claims 1 to 10, **characterised in that** a corresponding brewing pressure is associated with a predetermined position of the slide (7).

12. Device according to any one of claims 1 to 11, **characterised in that** the slide (7) is constructed as a clamp by means of which the length of the pivotable part of the leaf spring (5) is adjustable.

13. Device according to any one of claims 1 to 12, **characterised in that** the valve is, for pressure-free preparation of a beverage, fixable in an open position.

## Revendications

1. Dispositif pour la préparation d'une boisson, en particulier du café avec un réservoir pour un liquide amené par une pompe à une chambre d'ébullition (1), fermée par une soupape (10), la pression d'ébullition se réglant en fonction de la boisson à préparer,
**caractérisé en ce que**
la soupape (10) est couplée avec un ressort-lame (5) dont la force de ressort est réglée pour la fermeture de la soupape (10).

2. Dispositif selon la revendication 1,
**caractérisé**
**par** un coulisseau (7) pour régler la force de ressort.

3. Dispositif selon la revendication 1 ou 2,
**caractérisé en ce que**
la soupape (10) est disposée entre la chambre d'ébullition (1) et une sortie pour la boisson.

4. Dispositif selon l'une des revendications 1 à 3,
**caractérisé en ce qu'**
un élément d'étanchéité est fixé au ressort-lame (5) pour fermer une conduite de passage (8).

5. Dispositif selon l'une des revendications 1 à 4,
**caractérisé en ce que**
le coulisseau (7) est guidé linéairement le long du ressort-lame (5).

6. Dispositif selon l'une des revendications 1 à 5,
**caractérisé en ce que**
le coulisseau est réglable manuellement.

7. Dispositif selon l'une des revendications 1 à 5,
**caractérisé en ce que**
le coulisseau (7) est réglable au moyen d'un entraînement.

8. Dispositif selon l'une des revendications 1 à 7,
**caractérisé par**
une commande permettant de capter la position du coulisseau (7).

9. Dispositif selon l'une des revendications 1 à 8,
**caractérisé en ce que**
la pression d'ébullition est réglable dans une plage de 0 à 10 bars.

10. Dispositif selon l'une des revendications 1 à 9,
**caractérisé par**
un réglage continu de la pression d'ébullition.

11. Dispositif selon l'une des revendications 1 à 10,
**caractérisé en ce qu'**
à une position prédéterminée du coulisseau (7), on associe une pression d'ébullition correspondante.

12. Dispositif selon l'une des revendications 1 à 11,
**caractérisé en ce que**
le coulisseau (7) est réalisé en forme de pince au moyen de laquelle on peut régler la longueur de la partie pivotante du ressort-lame (5).

13. Dispositif selon l'une des revendications 1 à 12,
**caractérisé en ce que**
la soupape peut être fixée dans une position ouverte pour la préparation sans pression d'une boisson.
